# EUROPEAN PATENT APPLICATION

(11) **EP 1 768 136 A1**
(43) Date of publication of application: **28.03.2007**
(21) Application number: 06019114.5
(22) Date of filing: 12.09.2006
(51) Int. Cl.: H01F 17/04, H01F 3/10

(54) **Chip inductor**

(30) Priority: 21.09.2005 JP 2005273559
(71) Applicant: Sumida Corporation, Chuo-ku Tokyo 103-0013 (JP)
(72) Inventor: Watanabe, Yoshito, Chuo-ku Tokyo 1030013 (JP)
(74) Representative: Schäfer, Matthias W.

(57) **Abstract**

A chip inductor includes: a winding; a ferrite-based drum core having flange parts on both ends of a winding shaft around which the winding is wound; electrodes fixed to the flange parts on both ends of the winding shaft and for electrically connecting both ends of the winding to a mounting board; and a magnetic shield plate for connecting both flange parts in a region other than the electrodes, wherein the magnetic shield plate is a plate member containing an iron-based amorphous powder.

## Description

### CLAIM OF PRIORITY

This application claims the benefit of Japanese Patent Application No. 2005-273559 filed on September 21, 2005, the entire contents of which are hereby incorporated by reference herein.

### BACKGROUND OF THE INVENTION

### Field of the Invention

The present invention relates to a chip inductor of a surface mounting type used for electronic devices and the like.

### Description of the related art

In recent years, as progress has been made in reducing the size and thickness of electronic devices typified by a mobile phone and a notebook-type PC, there has been an increasing demand for reducing the size and height of a chip inductor for surface mounting that occupies a comparatively large volume in an electronic component mounted on a circuit board.

By reducing the size and height of the chip inductor for surface mounting, the structure of the chip inductor and a method for mounting the chip inductor on a circuit board have been improved. For example, there has been known a method for covering flange parts on both ends of a core constituting a chip inductor with insulating resin so as to bridge them and for carrying the core to a circuit board by sucking the portion covered with resin by the suction nozzle of an automatic mounting machine and then for releasing the sucking of the resin portion.

The magnetic circuit of the above-mentioned resin-formed chip inductor is an open magnetic circuit. For this reason, a leakage magnetic flux is likely to be coupled to other adjacent coil component. In view of a problem like this, there has been known a method for bridging a magnetic shield plate of a resin-ferrite composite type, which is made by mixing a ferrite magnetic powder into resin, between both flange parts (refer to, for example, Japanese Patent Application Laid-Open No. 2003-168611 (Claims, FIG. 1 and the like)).

The Japanese Patent Application Laid-Open No. 2003-168611 particularly discloses an invention relating to a common mode choke coil provided with a magnetic shield part having relative magnetic permeability lower than that of a core. By providing such a magnetic shield part, it is possible not only to prevent a leakage magnetic flux but also to reduce the effective magnetic permeability of the entire coil and to increase the degree of freedom of impedance value. Furthermore, it is also possible to provide the advantage of improving high-frequency characteristics as compared with a case where a chip inductor is provided with a magnetic shield part having the same relative magnetic permeability as that of the core.

However, the above-mentioned conventional technology presents the following problem. In the case of using a material of a resin-ferrite composite type for a magnetic shield part, the magnetic shield part cannot be extremely reduced in thickness because of constraints on forming of the material. For this reason, it is difficult to fulfill a demand for reducing the size or height of a chip inductor. Moreover, because ferrite is used, it is difficult to increase a saturation magnetic flux density and hence there is a limitation to an improvement in direct-current superposition characteristics.

### SUMAMRY OF THE INVENTION

The present invention has been made in view of such problems. The object of the present invention is to provide a chip inductor capable of effectively preventing a magnetic leakage and having excellent direct-current superposition characteristics and having an advantage in reducing size or height.

In order to achieve the above-mentioned object, the present invention is a chip inductor including: a winding; a ferrite-based drum core having flange parts on both ends of a winding shaft around which the winding is wound; electrodes fixed to the flange parts on both ends of the winding shaft and for electrically connecting both ends of the winding to a mounting board; and a magnetic shield plate for connecting both flange parts in a region other than the electrodes, wherein the magnetic shield plate is a plate member containing an iron-based amorphous powder.

For this reason, a magnetic flux passing through the core forms a closed magnetic circuit starting from one flange and entering other flange through the magnetic shield plate, which can effectively prevent noises from being caused by a magnetic flux leakage. Moreover, since the plate member containing the iron-based amorphous powder is subjected to smaller constraints on forming as compared with a plate member made by the use of a ferrite powder, the plate member can be formed in a comparatively thin thickness. In addition, the plate member containing the iron-based amorphous powder has a larger saturation magnetic flux density as compared with a plate member formed by the use of the ferrite powder. For this reason, even if the plate member containing the iron-based amorphous powder is reduced in thickness, the plate member is hard to magnetically saturate. For this reason, it is possible to manufacture a chip inductor that has excellent direct-current superposition characteristics and can be further reduced in size or height.

Moreover, another invention is a chip inductor, wherein the drum core in the above-mentioned invention is a quadrangular drum core provided with the flange parts each formed in the shape of a rectangular plate, and wherein the magnetic shield plate is arranged so as to connect side surfaces of the flange parts opposite to the side surfaces to which the electrodes are respectively bonded. For this reason, the chip inductor can be easily mounted on a circuit board and only by bonding the magnetic shield plate to the side opposite to the electrode, the chip inductor that has excellent direct-current superposition characteristics and can be further reduced in size or height can be manufactured.

Furthermore, still another invention is a chip inductor, wherein the magnetic shield plate in the above-mentioned each invention is a plate member made by solidifying the iron-based amorphous powder by resin. For this reason, a magnetic shield plate of a thinner type can be manufactured. Moreover, since a magnetic shield plate having excellent flexibility can be manufactured, it is possible to manufacture a magnetic shield plate that can flexibly respond to the shape of the flange part of the drum core.

Furthermore, still another invention is a chip inductor, wherein the iron-based amorphous powder in the above-mentioned invention is made of nano crystal grains each having an average grain diameter of 10 nm or less.

Furthermore, still another invention is a chip inductor, wherein each of the electrodes in the above-mentioned invention is formed so as to narrow toward a bottom surface on a circuit board side, and wherein plating for fixing the electrode to the circuit board is formed so as to broaden skirts from the electrode to the circuit board. For this reason, the volume of plating can be increased and hence the circuit board can be firmly bonded to the chip inductor.

### Effect of the Invention

According to the present invention, it is possible to provide a chip inductor capable of effectively preventing a magnetic leakage and having excellent direct-current superposition characteristics and having an advantage in reducing in size or height.

### BRIEF DESCRIPTION OF THE DRAWINGS

FIG. 1 is a view showing a chip inductor according to an embodiment of the present invention;
FIG. 2 is a diagram showing a state where the chip inductor shown in FIG. 1 is mounted on a circuit board; and
FIG. 3 is a diagram showing a modification different from the chip inductor shown in FIG. 1 and FIG. 2.

### DESCRIPTION OF THE PREFERRED EMBODIMENTS

Hereinafter, an embodiment of a chip inductor according to the present invention will be described with reference to the drawings.

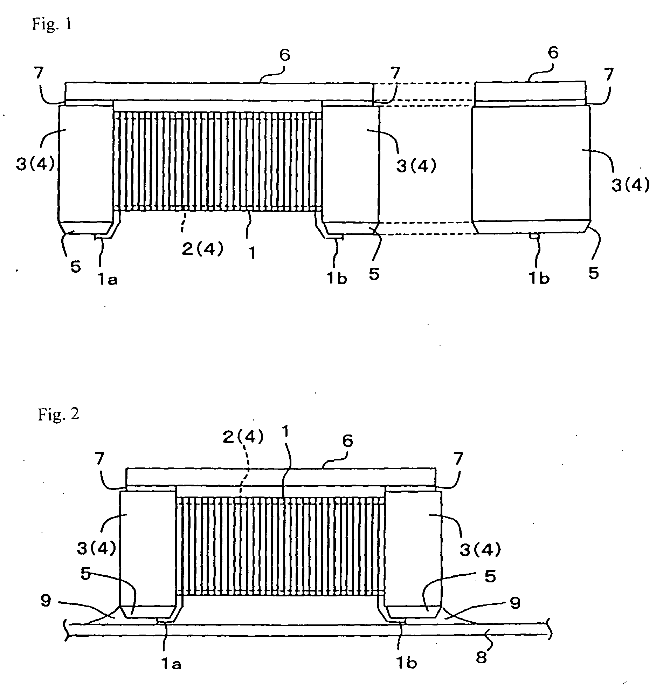

FIG. 1 is a side view of a chip inductor according to an embodiment of the present invention.

The chip inductor according to this embodiment includes a winding 1 and a drum core 4 having a winding shaft 2, around which the winding 1 is wound, and flange parts 3, 3 formed on both end portions in the direction of length of the winding shaft 2. In FIG. 1, the reference numerals of the drum core 4 are shown in parentheses after the respective reference symbols of the winding shaft 2 and the flange parts 3, 3.

The winding shaft 2 is formed in the shape of a nearly quadrangular prism. The flange parts 3, 3 are plate-shaped members each formed in the shape of a nearly quadrangular prism having a larger area than the cross section in the axial direction of the winding shaft 2. In the flange parts 3, 3, the length of one side of a plane in contact with the winding shaft 2 is longer than the length in the direction of thickness of a plane perpendicular to the plane. In the flange parts 3, 3 of this embodiment, one side is 2.3 mm but is not limited to this size. Moreover, electrodes 5, 5, each of which is formed in the shape of a nearly truncated pyramid having a smaller bottom surface on a side in contact with a circuit board, are fixed to the bottom surfaces of the two flange parts 3, 3, respectively. In this manner, the electrodes 5, 5 are fixed to the bottom surfaces of the respective flange parts 3, 3 each formed in the shape of a nearly quadrangular prism and the chip inductor is put into electric contact with the circuit board at these portions of the electrodes 5, 5. Hence, the electric connection between the chip inductor and the circuit board can be established easily and tightly.

Moreover, a magnetic shield plate 6 is bonded to one side surfaces of the flange parts 3, 3 and opposite to the electrodes 5, 5 by an adhesive so as to bridge the two flange parts 3, 3. The magnetic shield plate 6 will be later described in detail.

The winding 1 is a copper wire having a diameter of approximately 0.3 mm and having its periphery covered with an insulating material and is wound in the shape of a coil around the periphery of the winding shaft 2. Moreover, the drum core 4 (which is an integration of the winding shaft 2 and the flange parts 3, 3) is constituted of a ferrite-based material such as Mn-Zn base or Ni-Zn base. The electrodes 5, 5 are portions to be put into electric contact with the circuit board and are formed by coating a thick film paste such as silver, baking, forming patterns thereon by metallizing metal such as Mo-Mn, W, Ni, or Cu, and then plating their surfaces. Both ends 1a, 1b of the winding 1 wound around the winding shaft 2 are reduced in its thickness to approximately 0.15 mm and are pressed and welded to the bottom surfaces of the electrodes 5, 5, respectively.

The magnetic shield plate 6 includes a structure such that an iron-based amorphous powder composed of nano crystal grains each having an average grain diameter of 10 nmor less is solidified by resin. In this manner, the magnetic shield plate 6 is a mixture of the iron-based amorphous powder and the resin and hence is flexible as an entire plate. When the magnetic shield plate 6 is compared with the drum core 4 of the same volume, the saturation magnetic flux density of the magnetic shield plate 6 is extremely lager than that of the drum core 4. For this reason, even if the magnetic shieldplate 6 is reduced in thickness, its saturation magnetic flux density can be maintained comparatively high. In addition, the magnetic shield plate 6 formed by the use of the iron-based amorphous powder can be made thinner as compared with a magnetic shield plate formed by the use of a ferrite-based powder. The reason for this is as follows.

In the case of manufacturing the magnetic shield plate by the use of the ferrite-based powder, there is a constraint on manufacturing such that the magnetic shieldplate is manufactured by the process of sintering a ferrite-based powder, pulverizing the sintered substance, granulating the pulverized substance, and then again sintering the granulated substance. Hence, it is difficult to produce an extremely fine powder. In contrast to this, in the case of manufacturing a magnetic shield plate by the use of the iron-based amorphous powder, there is not such a constraint. In this manner, the magnetic shield plate 6 made by solidifying the iron-based amorphous powder by resin can be increased in saturation magnetic flux density and formed in a thinner thickness as compared with a magnetic shield plate formed by the use of the ferrite-based powder. Hence, the magnetic shield plate 6 made by solidifying the iron-based amorphous powder by resin has excellent direct-current superposition characteristics and has an advantage in manufacturing a chip inductor having an advantage in reducing size or height.

If the magnetic shield plate 6 is a resin composite material containing an iron-based amorphous powder, any composition of the powder can be used but powder made of a Fe-Si-B based material containing Fe as a main element is more preferable. The iron-based amorphous powder of the magnetic shield plate 6 used in this embodiment is made by heat-treating an iron-based amorphous alloy which is made by ultra-rapidly cooling a molten liquid alloy on the surface of a roll rotating at a high speed, to form crystal grains in an amorphous structure. When such powder is mixed with resin and solidified, the magnetic shield plate 6 is formed.

FIG. 2 is a side view showing a state where the chip inductor shown in FIG. 1 is mounted on a circuit board 8.

The electrodes 5, 5 of the chip inductor are fixedly bonded to specified portions on the circuit board 8 by plating 9. Each of the electrodes 5, 5 is formed so as to be narrowed toward the bottom surface on the circuit board 8 side, so that the plating 9 can be formed so as to broaden skirts from each of the electrodes 5, 5 toward the circuit board 8. Hence, the volume of the plating 9 can be increased and thus the circuit board 8 can be strongly bonded to the chip inductor.

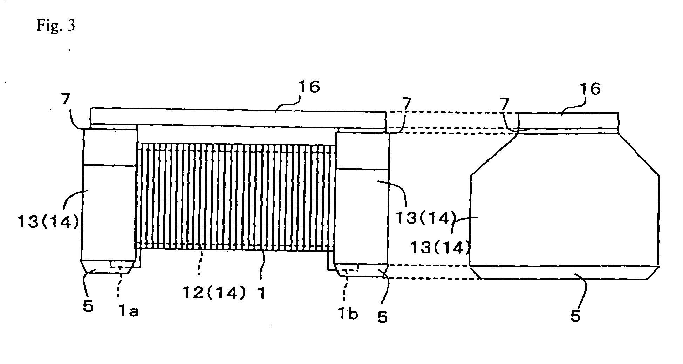

FIG. 3 is a diagram showing a modification of the chip inductor shown in FIG. 1 and FIG. 2.

The chip inductor shown in FIG. 3 is greatly different from the chip inductor shown in FIG. 1 and FIG. 2 in that a drum core 14 having flange parts 13, 13 each formed in the shape of a hexagonal prism is adopted. A winding shaft 12 constructing the drum core 14 is formed in the shape of a quadrangular prism. In FIG. 3, the reference symbols of the drum core 14 are shown in the parentheses after the respective reference symbols of the winding shaft 12 and the flange parts 13, 13.

The magnetic shield plate 16 is bonded only to one surfaces opposite to the electrodes 5, 5 of the flange parts 13, 13 by an adhesive 7 so as to bridge the flange parts 13, 13. In this manner, the magnetic shield plate 16 may be bonded only to one of other surfaces, to which the electrodes 5, 5 of the respective flange parts 13, 13 are not bonded. A leakage magnetic flux exists in the directions of side surfaces to which the magnetic shield plate 16 is not bonded but direct-current superposition characteristics are improved. Here, both ends la, 1b of the winding 1 may be berried in the electrodes 5, 5, respectively, as shown in FIG. 3.

Up to this point, preferred embodiments of the present invention have been described. However, the chip inductor according to the present invention is not limited to the above-mentioned preferred embodiments and can be put into practice in the following various modifications.

Each of both flange parts constructing the drum core may be formed not only in the shape of a quadrangular prism and a hexagonal prism but also in the shape of a pentagonal prism, a polygonal prism having a polygonal bottom surface of a heptagonal or more prism, and in the shape of a so-called semi-circular prism having a semi-circular bottom surface. In the case of both flange parts each formed in the shape of a polygonal prism, the magnetic shield plate 6 can be bonded to one or two or more surfaces other than a surface, to which the electrode is bonded, of a plurality of side surfaces of the polygonal prism.

Moreover, in the case of both flange parts each formed in the shape of a semi-circular prism, the magnetic shield plate 6 can be bonded along a curved surface so as to cover a part or all of the winding. However, when all of surfaces other than a surface, to which the electrodes 5, 5 are bonded, are covered with the magnetic shield plate 6, there is a possibility that magnetic characteristics (in particular, direct-current superposition characteristics) will deteriorate. Hence, it is preferable that the magnetic shield plate 6 is bonded to a part of the plurality of surfaces other than the surfaces to which the electrodes 5, 5 are bonded.

Furthermore, in the above-mentioned embodiments, the magnetic shield plate 6 is a plate member having a structure such that the iron-based amorphous powder is solidified by the resin. However, the magnetic shield plate 6 may be a plate member having a laminate structure such that a resin film is bonded to one surface or both surfaces of the plate member. Moreover, a material made by forming only the iron-based amorphous powder or a composite material made by mixing the iron-based amorphous powder and a material other than the resin may be adopted as the magnetic shield plate 6.

Furthermore, resin mixed with the iron-based amorphous powder may be either thermosetting resin or thermoplastic resin, but it is preferable to adopt the thermosetting resin having comparatively excellent heat resistance. Still further, powder made of a composite material other than Fe-Si-B base such as Fe-Ni base or Fe-Co base may be adopted as the iron-based amorphous powder.

The present invention can be used as an inductor that is surface-mounted on a circuit board.

## Claims

1. A chip inductor comprising:
a winding;
a ferrite-based drum core having flange parts on both ends of a winding shaft around which the winding is wound;
electrodes fixed to the flange parts on both ends of the winding shaft and for electrically connecting both ends of the winding to a mounting board; and
a magnetic shield plate for connecting both flange parts in a region other than the electrodes,
wherein the magnetic shield plate is a plate member containing an iron-based amorphous powder.

2. The chip inductor according to claim 1, wherein
the drum core is a quadrangular drum core having the flange parts each formed in a shape of a rectangular plate, and
the magnetic shield plate is arranged so as to connect side surfaces of the flange parts opposite to the side surfaces to which the electrodes are respectively bonded.

3. The chip inductor according to claim 1 or claim 2, wherein the magnetic shield plate is a plate member made by solidifying the iron-based amorphous powder by resin.

4. The chip inductor according to claim 3, wherein the iron-based amorphous powder is made of nano crystal grains each having an average grain diameter of 10 nm or less.

5. The chip inductor according to claim 1 or claim 2, wherein
each of the electrodes is formed so as to narrow toward a bottom surface on a circuit board side, and
plating for fixing the electrode to the circuit board is formed so as to broaden skirts from the electrode to the circuit board.
